# EUROPEAN PATENT SPECIFICATION

(11) **EP 4 125 399 B1**
(45) Date of publication and mention of the grant of the patent: **10.07.2024**
(21) Application number: 21706942.6
(22) Date of filing: 22.02.2021
(51) Int. Cl.: A23C 9/137

(54) **COMPOSITION FOR FERMENTED OR ACIDIFIED MILK PRODUCTS, ITS USE, PRODUCTS CONTAINING THE SAME AND PROCESS FOR THE PRODUCTION OF THESE PRODUCTS**
ZUSAMMENSETZUNG FÜR FERMENTIERTE ODER GESÄUERTE MILCHPRODUKTE, IHRE VERWENDUNG, PRODUKTE DAMIT UND VERFAHREN ZUR HERSTELLUNG DIESER PRODUKTE
COMPOSITION POUR DE PRODUITS LAITIERS FERMENTÉS OU ACIDIFIÉS, SON UTILISATION, PRODUITS LA CONTENANT ET PROCÉDÉ DE PRODUCTION DE CES PRODUITS

(30) Priority: 20.02.2020 EP 20158545
(43) Date of publication of application: 08.02.2023
(73) Proprietor: International N&H Denmark ApS, 2800 Kongens Lyngby (DK)
(72) Inventor: NIELSEN, Helge, Henrik, 1411 Copenhagen K (DK); ACHARYA, Ashishkumar, 1411 Copenhagen K (DK); MANUEL, Vernon, 7441 Cape Town (ZA); NIELSEN, Susanne, Roed, 1411 Copenhagen K (DK); LAURIDSEN, Kirsten, 1411 Copenhagen K (DK)
(74) Representative: International N&H EMEA
(86) International application number: PCT/EP2021/054299
(87) International publication number: WO 2021/165527

(56) References cited:
- WO-A1-00/18502
- WO-A1-2013/052114
- WO-A2-03/096976
- JP-A- 2008 220 268
- US-A- 4 851 239
- US-A1- 2013 059 032
- US-A1- 2013 090 391

## Description

### FIELD OF THE INVENTION

The present invention is directed to a composition containing colloidal microcrystalline cellulose, particularly for developing (uplifting) premium texture in various types of fermented or acidified milk products, preferably, yoghurt types, produced by using a colloidal microcrystalline cellulose and at least one other hydrocolloid, products made therewith and process for production of these products. The present invention is mainly directed to fermented or acidified milk products as yogurt type and ambient stable yogurt.

### BACKGROUND OF THE INVENTION

One key quality and value parameter of fresh fermented dairy products, such as stirred yoghurts and its derivatives, is texture. The texture of yoghurt influences the consumers' perception of the product as well as the eating characteristic. Generally, for a specific type of snacking Yoghurt or stirred yoghurt, a spoonable texture is a highly sought-after quality parameter.

In the industry, several different tools are used to create texture in yoghurt. First of all, the aggregation of proteins taken place during pH drop happening with the fermentation by means of lactic acid bacteria will create the basic texture of the yoghurt. However, this basic texture is directly dependent on the Milk Solid content (or more precisely, the Protein content of the milk used in the fermentation). Also, the texture is partly defined by the ability of the lactic acid bacteria used (starter culture) on its ability to produce EPS (exo-poly-saccharides) which contributes to the texture formation. The protein level of a yoghurt will influence the texture and it is a common fact that proteins are one of the most expensive component in the product recipes, thus reducing the protein level (with or without reducing the Fat content) would result into cost saving, but this always results into a poor/lose/runny/watery texture, generally not appreciated by consumers, as it is considered an indication of a poor-quality product. In such low protein / Low Milk solid yoghurt products, it is a common practice to use starch as a texture builder by thickening up the product, sometimes with or without other hydrocolloids like Pectin, LBG or Guar gum. However, the cost of these non-starch hydrocolloids is generally much higher, and at the required dosage level this results into a zero-cost benefit in the recipe. Also, on the other hand there is a limit to what extent (dosage) one can use these hydrocolloids (including starch) as they tend to skew the texture to be more long (termed Ropy) and slimy, limiting the use of such hydrocolloids. For example, using a very diluted sweetened milk for yoghurt will give no texture, and using starch into max. 3% will only make it more viscous, while using other hydrocolloids would make the product slimy (needless to say that they add up significant cost, too). Thus, it is important to stick a balance between lower cost (lower milk solids) with an acceptable texture to derive the cost benefit yet having wider consumer acceptance.

Now, taking through the need (& demand) from certain markets to have lower milk solids in yoghurt justifies the rational to make the end product more affordable and at the same time stretch the use of milk to cover a wider consumer base. Thus, eliminating the scarcity of milk while still serving the base of the consumer pyramid at an affordable cost price. Currently there are several active and high growth markets present, e.g. the Southern part of Africa wherein affordability and low cost are important factors. Another example can be the fast-growing South-East Asian markets (like Indonesia and Philippines), where milk is a scares resource, and affordability is key to cover a wider consumer base. This altogether makes It important to have a balance between the texture effect obtained and the cost to bring it about.

The choice of texture enhancing solution may also influence the appearance of the yoghurt. It is well known that starch takes away the shininess of a product, while other hydrocolloids may make the product slimy.

Microcrystalline cellulose, also known and referred to herein as "MCC", is hydrolysed cellulose. MCC powders and gels are commonly used in the food industry to enhance the properties or attributes of a final food product. For example, MCC has been used as a binder and stabilizer in a wide variety of consumable products such as in prepared food applications, including in beverages, as a gelling agent, a thickener, a fat substitute, and/or non-calorific filler, and as a suspension stabilizer and/or texturizer. MCC has also been used as a binder and disintegrant in pharmaceutical tablets, as a suspending agent in liquid pharmaceutical formulations, and as a binder, disintegrant, and processing aid, in industrial applications, in household products such as detergents and/or bleach tablets, in agricultural formulations, and in personal care products such as dentifrices and cosmetics. An important application for colloidal MCC is stabilization of suspensions, e.g., suspensions of solid particles in low viscosity liquids; and, more specifically, suspension of solids in milk, e.g., cocoa particles in chocolate milk.

MCC may be modified for the above-mentioned uses by subjecting hydrolyzed MCC aggregated crystallites, in the form of a high solids aqueous mixture, commonly known as "wet-cake", to an attrition process, e.g., extrusion, that substantially subdivides the aggregated cellulose crystallites into more finely divided crystallite particles. To prevent hornification, a soluble hydrocolloid may be added before, during, or following attrition, but before drying. The soluble hydrocolloid, wholly or partially, screens out the hydrogen bonds or other attractive forces between the smaller sized particles to provide a readily dispersible powder which is also known as Colloidal MCC. Colloidal MCC will typically form stable suspensions with little to no settling of the dispersed solids. Carboxymethyl cellulose is a common hydrocolloid used for these purposes (see for example U.S. Pat. No. 3,539,365 (Durand et al.) and the colloidal MCC products sold under the brand names AVICEL^{□} and GELSTAR^{□} by DuPont N&B. Many other hydrocolloids have been tried to co-process with MCC, such as starch, in U.S. Pat. App. 2011/0151097 (Tuason et al.)

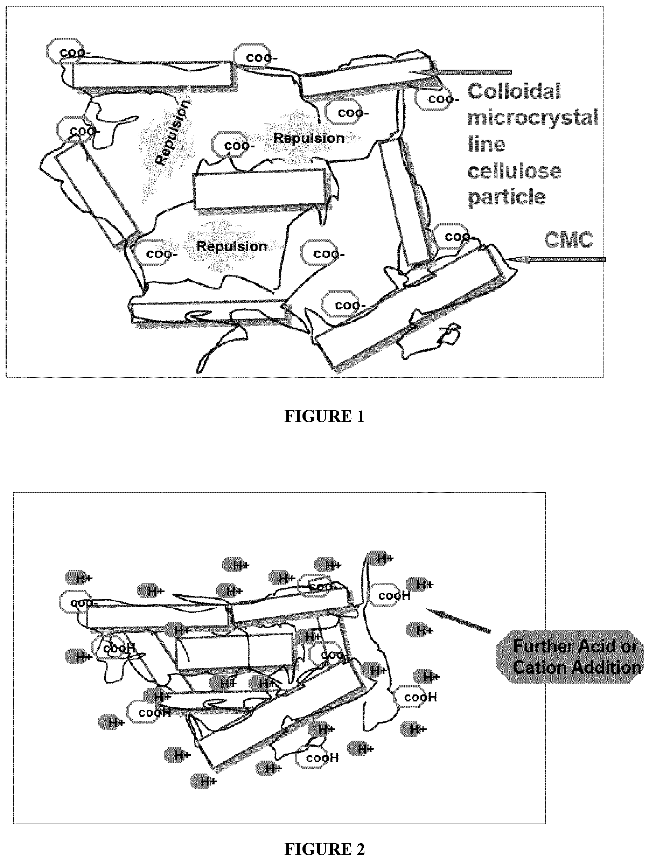

Avicel^{®} colloidal microcrystalline cellulose is produced by proprietary processes, covered by several patents including US20130090391A1 and WO2013052114A1, where insoluble colloidal-size, rod-shaped microcrystalline cellulose particles are co-processed with a suitable soluble hydrocolloid like carboxymethyl cellulose (CMC), but not limited to CMC. This causes the unsubstituted moieties of the CMC to be connected to the insoluble, rod-shaped microcrystalline cellulose particles through hydrogen bonds, extending the caboxylated moieties of the CMC molecule into the solution. This causes a three-dimensional network to be established in the solution, very much kept in suspension by the electrostatic repulsion of the carboxyl groups, as indicated in fig. 1.

The characteristics of the 3-dimensional network of colloidal AVICEL includes a short texture, thixotropy and heat stability, and due to these properties the colloidal AVICEL has been considered a unique multi-functional stabilizer for now more than 50 years in applications like neutral beverages, frozen desserts, whipping creams and dairy and non-dairy cooking creams.

If acid or cations are added to the colloidal network shown in fig. 1, the neutralization of the carboxyl groups would cause the network to collapse, because the negative repulsion would be eliminated, as shown in fig. 2.

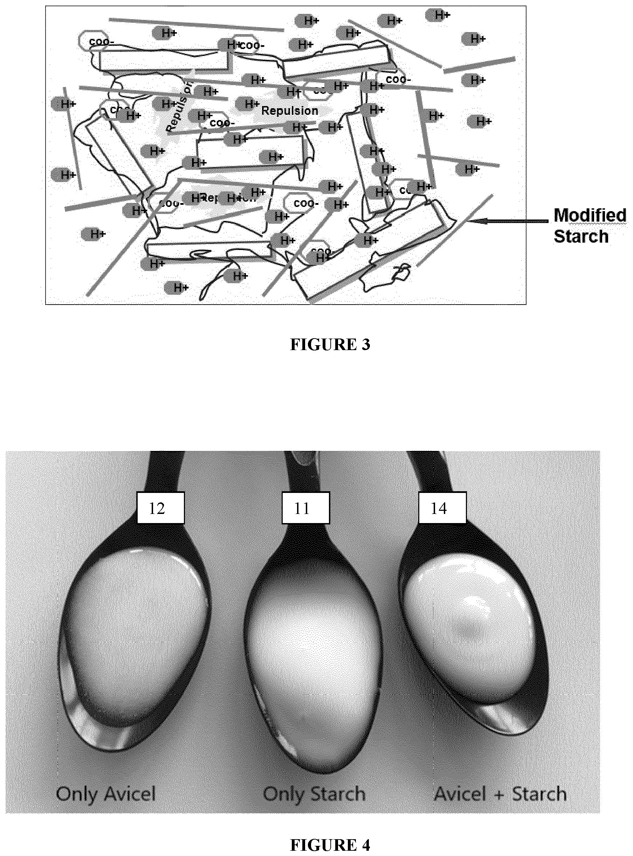

However, this flocculation can be avoided, if a protective colloid, like xanthan gum, is added, as shown in fig. 3.

Because of the protective colloid, xanthan gum, colloidal AVICEL has for decades been a unique multi-functional stabilizer in low pH applications like reduced- or low-fat dressings and mayonnaise. In fruit fillings, the presence of at least 3.5% starch would act as a protective colloid, maintaining an intact, heat stable colloidal AVICEL network, thereby making the fruit filling bake stable. Likewise, at least 3.5% starch in neutral bake stable fillings would act as a protective colloid for colloidal AVICEL in such products having a high content of cations like calcium ions.

Despite these well known, unique applications of colloidal microcrystalline cellulose (AVICEL), colloidal microcrystalline cellulose has never previously been found to provide or enhance a desired texture profile to yoghurt type products.

Some prior art documents mention the use of colloidal MCC as a stabilizer, not texturant. The focus is on the application of the unique, thixotropic stabilizing functionality of colloidal MCC. J P2007063289 describes the use of a colloidal type MCC for the production of acidified milk products having a pH of 4.6-5.1, whereas the pH of yogurt is generally in the range of 4-4.6, averagely 4.4. Lactic acid present at this pH is ideal for yogurt. The higher pH of 4.6-5.1 causes typically used stabilizers like pectin and CMC not to be functional. They found colloidal MCC to be effective in stabilizing fermented or directly acidified milk drinks having a pH of 4.6-5.1.

US4851239 mentions that the use of colloidal MCC together with carboxymethylcellulose, xanthan gum or other hydrophilic gums and emulsifiers like tween and mono-di glycerides were effective in creating a shelf stable aerosol dispensable yoghurt, which can be used as desserts and as toppings for other dessert items.

However, the findings of the present invention, where a perceived premium yoghurt texture is achieved in acidified products with low protein and fat contents (e.g. 1%) with combinations of colloidal MCC and modified starch is surprising and have not previously been taught.

### SUMMARY OF THE INVENTION

The object of the invention is to provide a solution to create the well-known texture (Thick & Creamy) of yoghurt in yoghurt-type products with lower protein and fat contents, i.e. where the milk raw materials for the yoghurt-type product have been diluted with water for either cost reasons or for milk raw material scarcity reasons. Typically, hydrocolloids and starches would create so-called long & grainy textures not associated with a traditionally perceived so-called short (thick & creamy) yoghurt texture.

Colloidal microcrystalline cellulose is well known for the short texture of the dispersions it creates. However, it's very important that enough shear is applied in-order for the functionality to be properly developed. Therefore, it's typically recommended to first disperse the colloidal microcrystalline cellulose powder in water during the application of the necessary shear forces, either by the use of rotor-stator mixers and or centrifugal pumps. Then typically the other ingredients in the formulation are added after the proper dispersion of the microcrystalline cellulose. This also includes starches, which after addition to the dispersed microcrystalline cellulose, will be gelatinized by heating to the gelatinization temperature. Thereafter, the dispersion including colloidal microcrystalline cellulose and starch could be added to the yoghurt in the desired ratio to reach the protein target. However, this two-step process is not an optimal process, as it would require the colloidal microcrystalline cellulose and starch dispersion to be created in elevated concentrations, which would then be having very high viscosities, in order to reach the concentration targets in the final product.

Therefore, a further object of the invention is to have a one-step process, where the colloidal microcrystalline cellulose powder and the starch are mixed with the milk and water prior to homogenization and pasteurization followed by cooling to the inoculation temperature, addition of the starter culture and the fermentation itself. Such a one-step process is not at all obvious for reasons, including that the fermentation process itself could be negatively impacted by the presence of colloidal microcrystalline cellulose and modified starch. The fermentation process is indeed impacted to some extent, the lag phase being about 2 hours longer. However, this is not considered prohibitive.

### BRIEF DESCRIPTION OF THE DRAWINGS

**Figure 1****.** The stable 3-dimensional gel network in colloidal microcrystalline cellulose.
**Figure 2****.** Flocculation of the 3-dimensional gel network.
**Figure 3****.** Stable 3-dimensional gel network in an acid or high cat-ion environment by the use of the protective colloid, modified starch.
**Figure 4** **&** **5****.** Visual difference in Yoghurt containing different levels of Avicel^{®} GP 3212 (From left to Right: 0%, 0.3%, 0.6%, 0.9% and 1.2% of Avicel^{®} GP 3212)
**Figure 6****.** Rheological properties of Yoghurt samples made as per recipes details in Table 1.
**Figure 7****.** Rheological properties of Yoghurt samples made as per recipes details in Table 2.
**Figure 8****.** Thickness and Stickiness derived from rheological measurement of Yoghurt samples made as per recipes details in Table 1.
**Figure 9****.** Thickness and Stickiness derived from rheological measurement of Yoghurt samples made as per recipes details in Table 2.
**Figure 10****.** Process flow diagram of yoghurt making process.
**Figure 11****.** Process flow diagram for ambient-stable yogurt making process.
**Figure 12****:** Visual difference in ambient-stable yogurt containing either Avicel^{®} GP 2313 & starch or starch, maltodextrine, agar & pectin. Thermisation condition 75-95°C/25 sec at pH 4.3-4.5.
**Figure 13****:** Confocal Laser Scanning Microscope (CLSM) photos difference in ambient-stable yogurt containing either Avicel^{®} GP 2313 & starch or starch, maltodextrine, agar & pectin. Thermisation condition 75-95°C/25 sec at pH 4.3-4.5.
**Figure 14****:** Visual difference in ambient-stable yogurt containing either Avicel^{®} GP 2313 & starch or starch, maltodextrine, agar & pectin. Thermisation condition 95-105-115°C/15 sec at pH 4.2, and thermisation at 115°C/15 sec at pH 4.6.
**Figure 15****:** Confocal Laser Scanning Microscope (CLSM) photos difference in ambient-stable yogurt containing either Avicel^{®} GP 2313 & starch or starch, maltodextrine, agar & pectin. Thermisation condition 95-105-115°C/15 sec at pH 4.2 and thermisation at 115°C/15 sec at pH 4.6.

### DETAILED DESCRIPTION OF THE INVENTION

The present invention makes it possible to create premium texture in yoghurt type products made from milk with varied levels of milk solids, starting with 1% Fat and 1% Protein onwards with improved textural properties showing thick and smooth creamy texture as well as a very clean flavour and mouthfeel by the use of colloidal microcrystalline cellulose and starch in an existing standard yoghurt process, as no complexity to the process is required.

Due to the properties of colloidal microcrystalline cellulose, the invention offers better shear resistance during smoothening and cooling in the post-fermentation downstream processes, and the invention makes it possible to produce a wider range of textures by varying dosing in yoghurts with the same milk solid base. Also, this invention when applied to making Ambient stable yoghurt i.e. Yoghurt made using Avicel and Starch would then be heat-treated to enhance shelf life, results into a finished product with improved smooth, thick and creamy texture. Furthermore, the invention allows for a possible calorie reduction due to the lowering of the milk solids as well as possibility for making resettable yoghurt to imitate the set-yoghurt properties in a stirred yoghurt process due to the thixotropic properties of colloidal microcrystalline cellulose.

The composition for fermented or acidified milk products object of the present invention comprising a combination of colloidal microcrystalline cellulose and a hydrocolloid in a ration between 1:2.5 to 1:7, according to the data shown in the examples.

The colloidal MCC used in the present invention is Avicel^{®} GP 3212 & GP 2313, which is colloidal microcrystalline cellulose produced by a proprietary process, where insoluble colloidal-size, rod-shaped microcrystalline cellulose particles are co-processed with carboxymethyl cellulose (CMC). The viscosity of a 1.2% dispersion in demineralized water of Avicel^{®} GP 3212 is 50-200 cP measured on a Brookfield RVT using spindle No.1 at 20rpm (reading after 1 minute), when the dispersion is measured 24 hours after the preparation of the dispersion. The dispersion is prepared with a Waring Blender, using a 1000ml bowl, at a speed of 18.000 to 19.000 rpm for 2 minutes.

In an embodiment of the invention, the colloidal microcrystalline cellulose is present in the amount between 0.3%-1.2%, preferably between 0.4-0.9% of the final fermented or acidified milk product.

The preferred hydrocolloid used in the present invention is starch. The starches used in the present invention are different types of starch used in Dairy/Yoghurt applications and are originating from sources such as Waxy Maize, Tapioca, Cassava and others. The primary types of starches are 1. Modified starches where they have designated food additives Number of E1442, 1422 & 1450 and 2. Native starches which have no designated additive (E) number. The Modified starches are generally chemically modified i.e., crosslinked or Oxidised using various food grade chemical methodologies while more often the native starches are either purely refined starched from the source OR are physically modified to deliver enhanced functionality in product or be more resistant to the processing conditions normally applied in yoghurt process.

The designated additive codes are specified as E numbers ("E" stands for "Europe") are codes for substances used as food additives for use within the European Union (EU)[1][2] and European Free Trade Association (EFTA).[3] Commonly found on food labels, their safety assessment and approval are the responsibility of the European Food Safety Authority (EFSA).

In figure 3 we can schematically visualize how the starch will secure that the colloidal MCC/CMC network, stabilized through electrostatic repulsion from the carboxyl groups, stays intact, as neutralization of the negative charges through the addition of acids and/or cat-ions in the presence of a protective colloid like starch will not cause the network to collapse, also known as flocculation.

In an embodiment of the invention, the modified starch content is between 1.0%-4.0% of the final fermented or acidified milk product.

In a preferred embodiment of the invention, the modified starch content is about 2.5%.

A commercially available stabiliser system named Grindsted SB264 was used to prepare the reference stirred yoghurt. This proprietary system contains Modified starch (E1442), Gelatine and Pectin (E440) which are then standardised with sugar. The manufacturer describes the benefits of such a system are Increased viscosity, improved body and texture and Reduced tendency to syneresis.

As described in the examples, the colloidal microcrystalline cellulose powder and the modified starch (E1442) are added to the milk prior to the homogenization at 200Bar. This homogenization pressure is typical in a standard yoghurt process, and the 200Bar pressure is furthermore recommended for a proper dispersion of the colloidal microcrystalline cellulose in a milk system. The pasteurization at 95 °C for 6 minutes is typical in a standard yoghurt process, but during these conditions the modified starch is furthermore gelatinized, whereby it provides the protective colloid properties required for the colloidal microcrystalline network to stay functional at the lower pH caused by the fermentation later in the process.

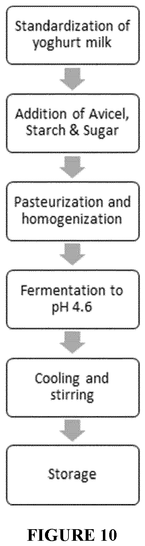

The process object of the present invention is represented by a block diagram in figure 10.

The total fermentation time is somewhat (~2 hours) longer, when colloidal microcrystalline cellulose and modified starch are present, compared to the standard yoghurt process, but this longer onset (lag phase) of the fermentation is not considered prohibitive for the process according to the invention.

As seen from the results in the examples, neither the colloidal microcrystalline cellulose nor the modified starch alone would provide the desired texture in the final product. Thus, results show a surprising synergy between colloidal microcrystalline cellulose and modified starch (E1442) in this type of application.

Additionally, a fermented acidified milk product prepared using a combination of Avicel GP3212 and Starch has shown excellent heat and bake stability when heated the up to 200°C for 30 min in a hot air oven. This together with heat stability shown no sign of graininess and separation in heated product.

The composition object to the invention is present in a proportion of 2.3 - 4.2% of the final acidified or fermented milk product obtained.

The protein content in the acidified or fermented milk product object of the present invention is between 0.5%- 3.5%, preferably 1.0%-2.5% or 3.0%.

Another embodiment of the invention is applied to ambient-stable yogurt application containing the composition previously described, wherein the colloidal microcrystalline cellulose is in the amount between 0.3-0.8%, the protein content in the application is preferably between 2.0 - 3.5% and the modified starch content is between 1.0% -3.0% of the final product. In this embodiment he thermization can be performed between pH 4.0-4.6 and temperature between 75-115°C/15-25 seconds.

The invention is further elucidated as shown in the examples.

### EXAMPLES

### I. Material and methods

### Example 1: Standard yoghurt procedure

Pre-pasteurised (72 °C for 15 s) bulk blended skimmed milk (0.1 % fat) (Arla Foods, Brabrand, Denmark) stored at 4-6 °C was standardised to a desired protein (% w/w), fat (% w/w) and sucrose (% w/w) content by addition of cream (38 % fat) from Arla Foods (Brabrand, Denmark), sucrose (Granulated Sugar 500, Nordic Sugar A/S, Denmark) and water (Tap). The standardised milk was then pasteurised and homogenised in a customised Mini-UHT system (Service Teknik, Randers, Denmark). Homogenisation was performed at 65 °C at 200 bar and pasteurisation at 95 °C for 6 minutes, and then cooled to 43 °C. The milk was inoculated with a thermophilic starter culture at an inoculation rate of 20 DCU/100 L. Fermentation was followed using the CINAC multichannel pH system (Ysebaert, Frépillon, France), which monitored the pH development every 5 min. Fermentation was conducted until pH 4.60 and was cooled on a yoghurt plate heat exchanger (SPX Flow Technology, Sussex, UK) and YTRON-ZP shear-pump system (YTRON Process Technology, Bad Endorf, Germany) to 24 °C. The resulting stirred style yoghurts were stored at 4-6 °C for further analysis of sensory, rheology and viscosity measurements as per example 3, 4 & 5 detailed hereafter. The yoghurt making procedure is also described in a flow diagram as per Figure 10.

### Example 2: Avicel^{®} GP 3212 and Modified Waxy Maize starch (E1442) addition

The texturization was investigated using addition of Mod. Starch (E1442) at fixed dosage with and without Avicel^{®} GP 3212 at different dosage into milk in a 5-liter scale set-up yoghurt production as per Table - 1. The base milk was standardized to 1.0 % (w/w) protein, 1.0 % (w/w) fat, and 8% Sucrose homogenized and pasteurized as described in example 1.

The Avicel^{®} GP 3212, Starch and Sugar were added to warm milk 45C and thoroughly mixed using stirrer and further processed as per example 1. The processed milk containing Avicel^{®} GP 3212 and Starch was then inoculated with starter cultures YO-MIX 883 and fermented to Ph 4.6 AT 43 C. Upon completion of fermentation the subsequent process was followed as per example -1. After 5 days of storage the texture was assessed by rotational rheological test as described in example 2. The resulting flow curves showed a constant and steady increase in the texture build up with increasing Avicel^{®} GP 3212 content in the yoghurt product. It was noted that measured thickness (Pa) using rheometer shows marked influence. The resultant yoghurt Thickness was 34% increased by addition of 0.3% Avicel^{®} GP 3212, 70% increased by addition of 0.6% Avicel^{®} GP 3212, 107% increased by addition of 0.9% Avicel^{®} GP 3212 and the highest was 173% increase by addition of 1.2% Avicel^{®} GP 3212 in a base recipe containing 3% starch compared to only starch containing one. The results are tabulated in below Table - 1 & 2.

**Table - 1. Trial plan recipe composition (Dosage of Avicel^{®} GP 3212 & Modified Starch)**

| **INGREDIENTS IN %** | | **11** | **12** | **13** | **14** | **15** | **17** | **19** |
|---|---|---|---|---|---|---|---|---|
| Cream (prot %=2,23 fat % =37,83) | % | 2.631 | 2.631 | 2.631 | 2.631 | 2.631 | 2.631 | 2.631 |
| Skimmed milk (pro%=3,97 fat % = 0,06) | % | 24.997 | 24.997 | 24.997 | 24.997 | 24.997 | 24.997 | 24.997 |
| Water (Tap) | % | 61.372 | 63.772 | 63.472 | 61.072 | 60.772 | 60.472 | 60.172 |
| Avicel^{®} GP 3212 | % | - | 0.600 | 0.900 | 0.300 | 0.600 | 0.900 | 1.200 |
| Starch BB 0380 waxy maize | % | 3.000 | - | - | 3.000 | 3.000 | 3.000 | 3.000 |
| Sucrose | % | 8.000 | 8.000 | 8.000 | 8.000 | 8.000 | 8.000 | 8.000 |
| Thermophilic starter culture | | + | + | + | + | + | + | + |
| Total % | | **100** | **100** | **100** | **100** | **100** | **100** | **100** |

| **COMPOSITION** | | | | | | | | |
|---|---|---|---|---|---|---|---|---|
| Fat % | | 1 | 1 | 1 | 1 | 1 | 1 | 1 |
| Protein % | | 1 | 1 | 1 | 1 | 1 | 1 | 1 |
| Added Sugar % | | 8 | 8 | 8 | 8 | 8 | 8 | 8 |

**Table - 2. Trial plan recipe composition (Dosage of Avicel^{®} GP 3212 & Starch)**

| **INGREDIENTS IN %** | | **41** | **42** | **43** | **44** | **47** | **48** | **49** | **50** |
|---|---|---|---|---|---|---|---|---|---|
| Cream (prot %=2,23 fat % =37,83) | % | 2.632 | 2.632 | 2.632 | 2.632 | 5.263 | 5.263 | 2.632 | 2.215 |
| Skimmed milk (pro%=3,97 fat % = 0,06) | % | 23.420 | 23.420 | 48.483 | 48.483 | 71.903 | 71.903 | 23.420 | 87.686 |
| Skim Milk Powder | | - | - | - | - | - | - | - | 1.000 |
| Water (Tap) | % | 62.348 | 62.048 | 37.785 | 37.485 | 12.333 | 12.033 | 62.948 | - |
| Avicel^{®} GP 3212 | % | 0.600 | 0.900 | 0.600 | 0.900 | 0.500 | 0.800 | - | - |
| Starch BB 0380 waxy maize | % | 3.000 | 3.000 | 2.500 | 2.500 | 2.000 | 2.000 | 3.000 | - |
| Stabiliser GRINDSTED SB264 | % | - | - | - | - | - | - | - | 1.100 |
| Sucrose | % | 8.000 | 8.000 | 8.000 | 8.000 | 8.000 | 8.000 | 8.000 | 8.000 |
| Thermophilic starter culture | | + | + | + | + | + | + | + | + |
| Total % | | **100** | **100** | **100** | **100** | **100** | **100** | **100** | **100** |

| **COMPOSITION** | | | | | | | | | |
|---|---|---|---|---|---|---|---|---|---|
| Fat % | | 1 | 1 | 1 | 1 | 2 | 2 | 1 | 1 |
| Protein % | | 1 | 1 | 2 | 2 | 3 | 3 | 1 | 3.9 |
| Added Sugar % | | 8 | 8 | 8 | 8 | 8 | 8 | 8 | 8 |

### Example 3: Sensory analysis of yoghurt products

Yoghurt products made as per example 1 and as detailed in recipes of Table 1 & 2 where analysed for Sensory characteristics using a trained panel. The primary parameter considered for sensory analysis where similar to the one used for Sweetened Stirred yoghurt encompassing: Appearance (Shininess), Colour, Spoon viscosity, spoon texture, Mouth feel, Flavour, Mouth thickness, Creaminess and Dryness (Chalkiness) in mouth. These sensory descriptors were measured on a comparative scale and each of the yoghurt products were rated primarily for their sensorial-texture attributes.

### Example 4: Rheology of prepared diluted yoghurts using Avicel^{®} GP 3212 and Modified Waxy Maize starch (E1442) as per Table 1

It is decided that the yoghurts will be followed through sensory and analytical examination at the end of the shelf life (4 weeks) to ascertain any difference in character which might have developed.

A rotational rheological test was employed to evaluate the viscous behaviour of stirred style yoghurts. Flow curves were obtained with an Anton Paar MCR (Modular Compact Rheometer) 302 rheometer (Anton Paar GmbH, Ostfildern, Germany) using the cone plate measurement system ST22-4V-40. The test method was a controlled shear rate test (CSR), where the shear rate is controlled, and the resulting shear stress is measured. The shear rate intervals applied to the samples were 0.1-200 s⁻¹, which defines the up-curve, and the reverse operation explains the down-curve (200-0.1 s⁻¹). The value of the measuring point duration was selected to be at least as long as the value of the reciprocal shear rate, which is valid for the up-curve. The tests were performed under constant temperature of 10 °C, and each sample was analysed in duplicates. A water bath was connected to the rheometer to ensure isothermal conditions.

From the flow curves the apparent viscosity was assessed, which is appropriate for fluids where the ratio of shear stress to shear rate varies with the shear rate. The apparent viscosity was extracted at either shear rate 10 Hz or 200 Hz. The apparent viscosity extracted at shear rate 10 Hz indicates the thickness of the sample. The apparent viscosity extracted at shear rate 200 s⁻¹ is correlated to the sensory perceptions mouth feel and coating.

### Measurement of Yoghurt - Standard stirred rheology using MCR302 Rheometer

Spindle used ST22-4V-40 which has a Vane geometry and sample were prefilled in Alu cups at the time of production (cooling of Yoghurt product).

During measurement the Gap of 1mm was maintained between the spindle and alucup internal surface
Measurement started at 10°C (± 0.2°C) stable and carried out for 180 sec
Shear rate of 0,1-350 1/s - constant ramp - 25 datapoints @ 10s interval (Upcurve) and 350-0,1 1/s - constant ramp - 25 datapoints @ 2,4s interval (Downcurve)

Years of experiments shows that sensory attributes can be roughly estimated at specific shear rates as shown in Table 3 below:

**Table - 3**

| Sensory attribute | Shear rate value |
|---|---|
| Thickness in the mouth = G' at | **11.7s⁻¹** of Upward curve |
| Stickiness in the mouth = Linear Regression | **10s⁻¹ to 40s⁻¹** |
| Coating in the mouth = Max G' | **Endpoint 200s⁻¹ or 350s⁻¹** of Upward curve |

### Example 5: Further analysis using Brookfield Viscometer

Viscosity measurement by Brookfield Viscometer is performed at 6 °C using protocol as described below along with parameters of measurement as described in Table 4

Switch on the Brookfield (on the back of the equipment) --> Follow the instructions for calibration ("Auto Zero") --> Select the spindle; press "select spindle", then use arrows - and to select the spindle number, and press "select spindle" to validate (as per below table) --> Select the speed; press "set speed", then use arrows - and to select the speed number, and press "set speed" to validate --> Pour the beverage in the ULA double jacket --> Fix the double jacket to the Brookfield (Check that the cylinder is totally submerged) --> The measurement can be started after 60s to allow the temperature to stabilize --> Press "Motor on/off' to start the measurement --> Read the value of viscosity after 60s --> Press "Motor on/off" to stop the viscometer motor --> Remove the double jacket, clean and dry the double jacket and the cylinder

Measurements in Brookfield viscometer are in mPas (milli Pascal seconds) or cp (centi-poises) and it takes about 3 minutes per analysis

**Table -4. Parameters used for measuring Brookfield viscosity on yoghurt samples produced as per recipes in Table-1 & 2**

| Type of product | Temp. °C | Rotation speed RPM | Delay Sec. | Spindle, Type or code | Helipath Yes/No Parameter | Comments |
|---|---|---|---|---|---|---|
| Stirred yogurt | 6 | 10 | 30 | Disk type, generally n°4 | No | Measurement occurs in hot-die seal beakers (white plastic). Product must be filled into it directly during production (after stirring). |

**Table -5. Results of Brookfield Viscosity measured on yoghurt samples produced as per recipes in Table-1 & 2**

| **Sample No.** | **Average Dynamic Viscosity (pa-s) Disc 04 - 10 rpm - 30 sec** |
|---|---|
| 11 | ∼6220 |
| 12 | ∼74 |
| 13 | 7320 |
| 15 | 7920 |
| 17 | 14560 |
| 19 | 11560 |
| 41 | 10667 |
| 42 | 14033 |
| 43 | 14133 |
| 44 | 18633 |
| 47 | 28633 |
| 48 | 31933 |
| 49 | ∼6220 |
| 50 | 21600 |

### Example 6: Ambient-stable yogurt procedure

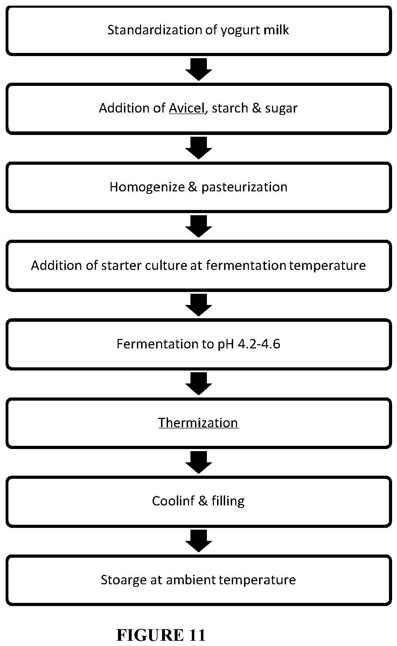

Pre-pasteurised (72 °C for 15 s) bulk blended skimmed milk (0.1 % fat) (Aria Foods, Brabrand, Denmark) stored at 4-6 °C was standardised to a desired protein (% w/w), fat (% w/w) and sucrose (% w/w) content by addition of cream (38 % fat) from Arla Foods (Brabrand, Denmark), sucrose (Granulated Sugar 500, Nordic Sugar A/S, Denmark) and water (Tap). The standardised milk was then pasteurised and homogenised in a customised PHE system (Service Teknik, Randers, Denmark). Homogenisation was performed at 65 °C at 200 bar and pasteurisation at 95 °C for 6 minutes, and then cooled to 43 °C. The milk was inoculated with a thermophilic starter culture at an inoculation rate of 20 DCU/100 L. Fermentation was followed using the CINAC multichannel pH system (Ysebaert, Frépillon, France), which monitored the pH development every 5 min. Fermentation was conducted until pH was between 4.2-4.6 depending on the set-up of experiment. After fermentation the yogurt was heated up to 75-95°C for 25 seconds for pH 4.3-4.5 or heated up to 95-115°C for 15 seconds for pH 4.2 or 115°C for 15 seconds for pH 4.6. And after this thermization the yogurt was cooled down to 24°C on. The thermization and cooling was performed on UHT equipment (SPX Flow Technology, Silkeborg, DK). The resulting ambient-stable yoghurts were stored at 20-25°C for further analysis of sensory and confocal laser scanning microscopy as per example 7,8 and 9 detailed hereafter. The yoghurt making procedure is also described in a flow diagram as per Figure 11.

### Example 7: Avicel^{®} GP 2313 and Modified Waxy Maize starch (E1442) addition

The ability to protect protein in ambient-stable was investigated using addition of Mod. Starch (E1442) at fixed dosage with Avicel^{®} GP 2313 at different dosages into milk in a 28-liter scale set-up yoghurt production as per Table 6 and 7. The base milk was standardized to 3.0 % (w/w) protein, 3.0 % (w/w) fat, and 8% sucrose, homogenized and pasteurized as described in example 6. As comparative reference was used a commercial combination of modified starch, maltodextrin, agar & pectin, which is commonly used for protein protection in ambient-stable yogurt.

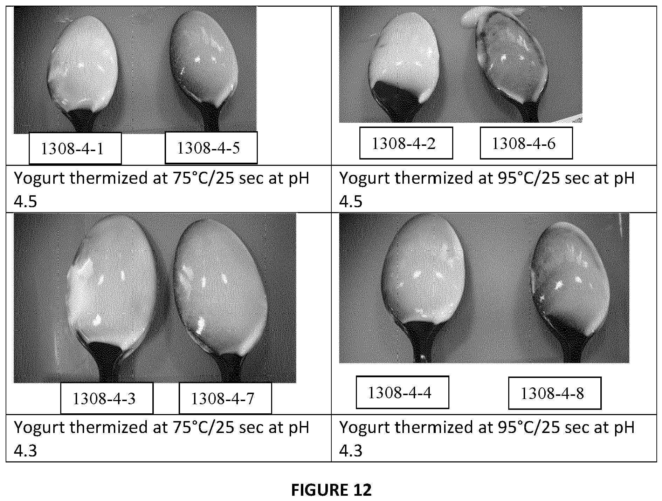

The addition of Avicel^{®} GP 2313 & Starch or comparative reference and Sugar was added to warm milk 45C and thoroughly mixed using stirrer and further processed as per example 6. The processed milk containing Avicel^{®} GP 2313 & Starch or comparative reference was then inoculated with starter cultures YO-MIX 883 LYO and fermented to pH 4.2-4.6 at 43 °C. Upon completion of fermentation the subsequent process was followed as per example 6. After 7 days of storage the texture was assessed by sensory evaluation with focus on protein stability as well as assessed by Confocal Laser Scanning Microscope. The composition can be found in table 6 and table 7 and the results of the sensory evaluation in table 8, table 9 and figure 12 -15.

**Table - 6. Trial plan recipe composition of ambient stable yogurt**

| **INGREDIENTS IN %** | | **1308-4-1** | **1308-4-2** | **1308-4-3** | **1308-4-4** | **1308-4-5** | **1308-4-6** | **1308-4-7** | **1308-4-8** |
|---|---|---|---|---|---|---|---|---|---|
| Cream (prot %=2,23 fat % =37,83) | % | 7.994 | 7.994 | 7.994 | 7.994 | 7.994 | 7.994 | 7.994 | 7.994 |
| Skimmed milk (pro%=3,97 fat % = 0,06) | % | 74.459 | 74.459 | 74.459 | 74.459 | 74.459 | 74.459 | 74.459 | 74.459 |
| Water (Tap) | % | 7.147 | 7.147 | 7.147 | 7.147 | 7.247 | 7.247 | 7.247 | 7.247 |
| Avicel^{®} GP 2313 | % | 0.400 | 0.400 | 0.400 | 0.400 | - | - | - | - |
| Starch BB 0380 waxy maize | % | 2.000 | 2.000 | 2.000 | 2.000 | - | - | - | - |
| Modified starch, maltodextrin, agar & pectin | | - | - | - | - | 2.3 | 2.3 | 2.3 | 2.3 |
| Sucrose | % | 8.000 | 8.000 | 8.000 | 8.000 | 8.000 | 8.000 | 8.000 | 8.000 |
| Thermophilic starter culture | | + | + | + | + | + | + | + | + |
| Total % | | **100** | **100** | **100** | **100** | **100** | **100** | **100** | **100** |

| **COMPOSITION** | | | | | | | | | |
|---|---|---|---|---|---|---|---|---|---|
| Fat % | | 3.0 | 3.0 | 3.0 | 3.0 | 3.0 | 3.0 | 3.0 | 3.0 |
| Protein % | | 3.0 | 3.0 | 3.0 | 3.0 | 3.0 | 3.0 | 3.0 | 3.0 |
| Added Sugar % | | 8.0 | 8.0 | 8.0 | 8.0 | 8.0 | 8.0 | 8.0 | 8.0 |
| pH during thermization | | 4.5 | 4.5 | 4.3 | 4.3 | 4.5 | 4.5 | 4.3 | 4.3 |
| Thermization temperature | | 75°C/25 sec | 95°C/25 sec | 75°C/25 sec | 95°C/25 sec | 75°C/25 sec | 95°C/25 sec | 75°C/25 sec | 95°C/25 sec |

**Table - 7. Trial plan recipe composition of ambient stable yogurt**

| **INGREDIENTS IN %** | | **1308-5-1** | **1308-5-2** | **1308-5-3** | **1308-5-4** | **1308-5-5** | **1308-5-6** | **1308-6-4** | **1308-6-6** |
|---|---|---|---|---|---|---|---|---|---|
| Cream (prot %=2,23 fat % =37,83) | % | 7.994 | 7.994 | 7.994 | 7.994 | 7.994 | 7.994 | 7.994 | 7.994 |
| Skimmed milk (pro%=3,97 fat % = 0,06) | % | 74.459 | 74.459 | 74.459 | 74.459 | 74.459 | 74.459 | 74.459 | 74.459 |
| Water (Tap) | % | 7.147 | 7.147 | 7.147 | 7.147 | 7.247 | 7.247 | 7.247 | 6.847 |
| Avicel^{®} GP 2313 | % | - | - | - | 0.4 | 0.4 | 0.4 | 0.4 | 0.8 |
| Starch BB 0380 waxy maize | % | - | - | - | 2.0 | 2.0 | 2.0 | 2.0 | 2.0 |
| Modified starch, maltodextrin, agar & pectin | | 2.3 | 2.3 | 2.3 | - | - | - | - | - |
| Sucrose | % | 8.000 | 8.000 | 8.000 | 8.000 | 8.000 | 8.000 | 8.000 | 8.000 |
| Thermophilic starter culture | | + | + | + | + | + | + | + | + |
| Total % | | **100** | **100** | **100** | **100** | **100** | **100** | **100** | **100** |

| **COMPOSITION** | | | | | | | | | |
|---|---|---|---|---|---|---|---|---|---|
| Fat % | | 3.0 | 3.0 | 3.0 | 3.0 | 3.0 | 3.0 | 3.0 | 3.0 |
| Protein % | | 3.0 | 3.0 | 3.0 | 3.0 | 3.0 | 3.0 | 3.0 | 3.0 |
| Added Sugar % | | 8.0 | 8.0 | 8.0 | 8.0 | 8.0 | 8.0 | 8.0 | 8.0 |
| pH during thermization | | 4.2 | 4.2 | 4.2 | 4.2 | 4.2 | 4.2 | 4.6 | 4.6 |
| Thermization temperature | | 95°C/15 sec | 105°C/15 sec | 115°C/15 sec | 95°C/15 sec | 105°C/15 sec | 115°C/15 sec | 115°C/15 sec | 115°C/15 sec |

### Example 8: Sensory analysis of yoghurt products

Yoghurt products made as per example 6 and as detailed in recipes of Table 6 and table 7 where analysed for Sensory characteristics using an expert panel. The primary parameter considered for sensory analysis where similar to the one used for Sweetened Stirred yoghurt encompassing: Appearance (Shininess), Spoon viscosity, Mouth thickness and Dryness (Chalkiness) in mouth. These sensory descriptors where measured on a comparative scale and each of the yoghurt products were rated primarily for their sensorial-texture attributes.

**Table -8. Results of sensory evaluation measured on ambient-stable yoghurt samples produced as per recipes in Table-6**

| **INGREDIENTS IN %** | | **1308-4-1** | **1308-4-2** | **1308-4-3** | **1308-4-4** | **1308-4-5** | **1308-4-6** | **1308-4-7** | **1308-4-8** |
|---|---|---|---|---|---|---|---|---|---|
| Avicel^{®} GP 2312 | % | 0.400 | 0.400 | 0.400 | 0.400 | - | - | - | - |
| Starch BB 0380 waxy maize | % | 2.000 | 2.000 | 2.000 | 2.000 | - | - | - | - |
| Modified starch, maltodextrin, agar & pectin | % | - | - | - | - | 2.3 | 2.3 | 2.3 | 2.3 |

| **TREATMENT** | | | | | | | | | |
|---|---|---|---|---|---|---|---|---|---|
| pH during thermization | | 4.5 | 4.5 | 4.3 | 4.3 | 4.5 | 4.5 | 4.3 | 4.3 |
| Thermization temperature | | 75°C/25 sec | 95°C/25 sec | 75°C/25 sec | 95°C/25 sec | 75°C/25 sec | 95°C/25 sec | 75°C/25 sec | 95°C/25 sec |

| **SENSORY EVALUATION** | | | | | | | | | |
|---|---|---|---|---|---|---|---|---|---|
| Syneresis | | 0 | 0 | 0 | 0 | 0 | 5 | 0 | 0 |
| Spoon viscosity | | 5 | 5 | 4.5 | 5 | 3 | 1.5 | 3 | 2 |
| Shininess | | 6 | 5 | 7 | 6 | 2 | 0 | 5 | 4 |
| Mouth viscosity | | 4.5 | 3.5 | 4 | 3 | 2.5 | 1 | 4 | 2 |
| Mouth coating | | 4 | 3 | 3 | 2.5 | 1.5 | 1 | 3 | 1.5 |
| Smoothness | | 6 | 4 | 6.5 | 5.5 | 1.5 | 1 | 4 | 1 |

| | | | | | | | | | |
|---|---|---|---|---|---|---|---|---|---|
| Sensory scale: 0 (no/low) -9 (high) | | | | | | | | | |

**Table -9. Results of sensory evaluation measured on ambient-stable yoghurt samples produced as per recipes in Table-7**

| **INGREDIENTS IN %** | | **1308-5-1** | **1308-5-2** | **1308-5-3** | **1308-5-4** | **1308-5-5** | **1308-5-6** | **1308-6-4** | **1308-6-6** |
|---|---|---|---|---|---|---|---|---|---|
| Avicel^{®} GP 2312 | % | - | - | - | 0.400 | 0.400 | 0.400 | 0.400 | 0.800 |
| Starch BB 0380 waxy maize | % | - | - | - | 2.000 | 2.000 | 2.000 | 2.000 | 2.000 |
| Modified starch, maltodextrin, agar & pectin | % | 2.3 | 2.3 | 2.3 | - | - | - | - | - |

| **TREATMENT** | | | | | | | | | |
|---|---|---|---|---|---|---|---|---|---|
| pH during thermization | | 4.2 | 4.2 | 4.2 | 4.2 | 4.2 | 4.2 | 4.6 | 4.6 |
| Thermization temperature | | 95°C/15 sec | 105°C/ 15 sec | 115°C/ 15 sec | 95°C/15 sec | 105°C/1 5 sec | 115°C/1 5 sec | 115°C/ 15 sec | 115°C/1 5 sec |

| **SENSORY EVALUATION** | | | | | | | | | |
|---|---|---|---|---|---|---|---|---|---|
| Syneresis | | 0 | 0 | 0 | 0 | 0 | 0 | 0 | 0 |
| Spoon viscosity | | 3 | 3 | 3 | 6 | 4.5 | 4.5 | 1.5 | 3 |
| Shininess | | 4 | 3 | 2 | 5 | 5 | 5 | 5 | 5 |
| Mouth viscosity | | 3 | 2.5 | 2 | 4.5 | 4 | 3.5 | 2.5 | 1 |
| Mouth coating | | 3 | 2 | 1.5 | 4 | 4 | 3.5 | 2 | 1 |
| Smoothness | | 2 | 0.5 | 0.5 | 5 | 4 | 3 | 1 | 6 |

| | | | | | | | | | |
|---|---|---|---|---|---|---|---|---|---|
| Sensory scale: 0 (no/low) -9 (high) | | | | | | | | | |

### Example 9: Confocal Laser Scanning Microscope (CLSM) analysis of yoghurt products

Yoghurt products made as per example 6 and as detailed in recipes of Table 6 and 7, where analysed using Confocal Laser Scanning Microscope for evaluation of the yogurt texture. All photos were captured using a Nikon Ti-U inverted microscope with a Ti D-Eclipse C1 confocal system (Nikon, Tokyo, Japan). Two laser beams were set at 488 nm and 543 nm, respectively. For laser scanning confocal measurements, Nile red and fluorescein isothiocyanate (FITC) were used as fluorescent staining agents for fats and proteins, respectively. Both staining agents were dissolved in acetone (0.01 %). One or two drops of staining solution was smeared onto a microscope slide and acetone was allowed to evaporate before sample addition. Samples were left in contact with the dyes for approximately 20 minutes at room temperature before imaging. All images were acquired at a depth of 7µm into the sample. Protein is seen as green, fat as red and water/whey/starch rich areas as black.

### II. Results

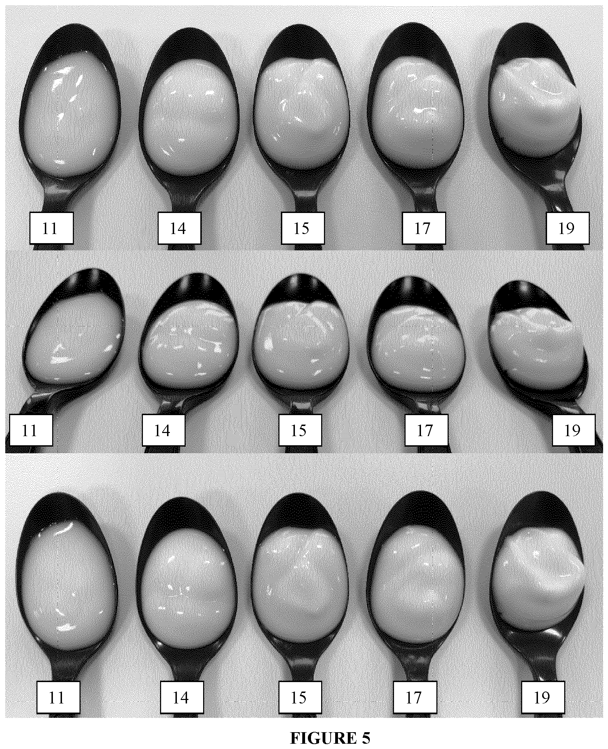

The prepared yoghurts as per recipes in Table -1 & 2 were tested for Sensory properties which showed that the yoghurt containing only starch, had a dull (grainy) appearance and longer texture with very thin (flowable) consistency. Whilst the yoghurt samples prepared with only Avicel^{®} GP 3212 where unstable and showed phase separation showing watery phase on top and white proteinatious phase on bottom. These sensorial-texture and appearance dramatically changed when Avicel^{®} GP 3212 was incorporated together with Starch wherein the texture kept on becoming thicker as the dosage of Avicel^{®} GP 3212 increased (Table -1 & 2) and visual aspect of this can be seen in figure 4 & 5.

Yoghurt products containing Avicel^{®} GP 3212 were found to be short in texture and looked shinier than only starch containing product yet having cleaner flavour perception. As per Figure-5 it can be seen that the visual appeal of the Avicel^{®} GP 3212 containing products was greatly enhanced for both the spoon viscosity as well as shininess of the resultant yoghurts. This sensory analysis shows that the texture of yoghurt like products can be changed to premium using Avicel^{®} GP 3212 together with modified starch.

Viscosity measurement using Brookfield viscometer detailed in Table 5, clearly shows lowest viscosity when using only Avicel^{®} GP 3212 but shows clear impact of starch addition on the viscosity of the resultant yogurt product. There is a marked increase in viscosity levels as the Avicel^{®} GP 3212 dosage is incremental and can be compared in sample 11 to 19 as well 41, 42 & 49 (Table 5). It can be noted that beyond 0.3% dosage of Avicel^{®} GP 3212 the yoghurt product becomes optimally & increasingly thick & creamy resembling the changed to standard low-fat yoghurt even at lower fat and protein composition.

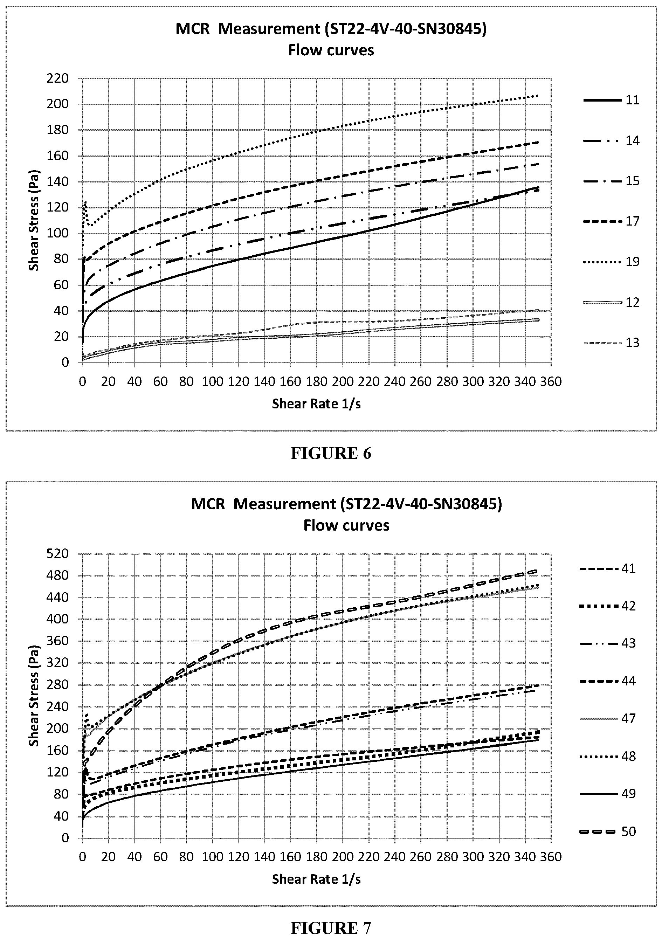

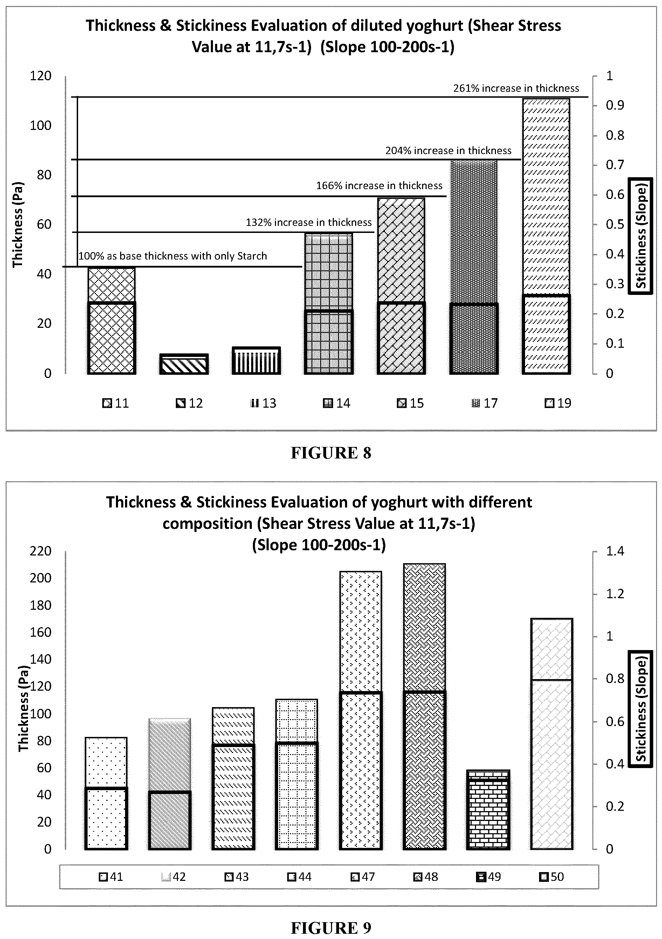

Rheological measurements of the yoghurt products made with variable composition and dosage of Avicel^{®} GP 3212 &/or Starch as described in Table -1 & 2 shows a clearer trend that addition of Avicel^{®} GP 3212 into a yoghurt product prepared together with Starch has synergistic effect on developing premium thick & creamy texture; which is not seen when using only Avicel^{®} GP 3212 or Starch as alone. Figure 6 & 7 shows the strength of the yoghurt structure, whereas Figure 8 & 9 shows how the instrumental rheology shows marked increase in measured thickness and stickiness of the yoghurt products in tandem with increased dosage of Avicel^{®} GP 3212 in yoghurt products.

It has been surprisingly observed that the performance of the texture profile (both measured as rheology & Brookfield viscosity) of the combination object of the present invention was higher than the sum of the individual performance of the ingredients. This synergetic effect was 32% higher measured thickness (in sample 14) when 0.3% Avicel^{®} GP 3212 was added compared to the only starch containing sample (Sample 11), 66.68% higher when 0.6% Avicel^{®} GP 3212 was added (sample 15), 104.57% higher when 0.9% Avicel^{®} GP 3212 was added and 161.61% higher when 1.2% Avicel^{®} GP 3212 was added on top of constant starch of 3%. Moreover, this increased thickness was not having any increase in stickiness which is desirable as it makes the product texture shorter (see figure 8 & 9).

These results very well corelate with the sensory evaluation and perceived quality lift of the finished yoghurt when both Modified starch and Avicel^{®} GP 3212 are used in making of Yoghurt type product with variable milk solids composition exhibiting their synergistic effect on textural properties as shown in Figure 4 & 5.

Various modifications and variations of the described methods and composition of the present invention will be apparent to those skilled in the art without departing from the scope of the present invention. Although the present invention has been described in connection with specific preferred embodiments, it should be understood that the invention as claimed should not be unduly limited to such specific embodiments. Indeed, various modifications of the described modes for carrying out the invention which are obvious to those skilled in chemistry applied in food industry or related fields are intended to be within the scope of the following claims.

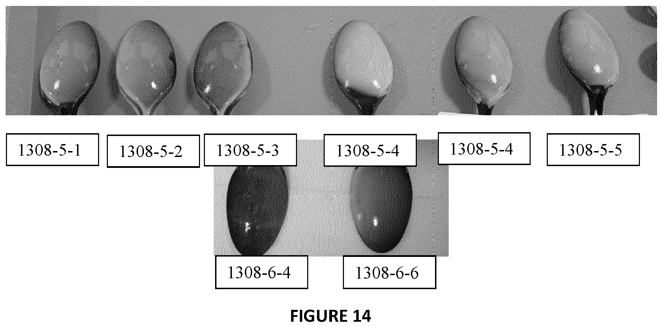

The prepared ambient-stable yoghurts as per recipes in table 6 and table 7 were tested for Sensory properties as seen in table 8 and table 9, which showed that the ambient-stable yoghurt containing the comparative reference of modified starch, maltodextrin, agar and pectin is stable, when thermized at 75°C/25 sec at pH 4.3, here the ambient-stable yogurt has good shininess, medium-high mouth viscosity and medium smoothness. If the ambient-stable yogurt containing the comparative reference of modified starch, maltodextrin, agar and pectin is either thermized at 95°C/25 sec at pH 4.3 or thermized at 75-95°C/25 sec at pH 4.5 or thermized at 95-105-115°C/15 sec at pH 4.2, the ambient-stable yogurt is un-stable, as the ambient-stable yogurt here has low shininess and low smoothness (low smoothness = chalky mouth sensation) combined with low mouth viscosity. Low shininess and low smoothness/chalkiness are clear signs of, that the protein is not stable. Whilst the ambient-stable yoghurt samples prepared with a combination of Avicel^{®} GP 2313 & starch are stable, thermized at 75-95°C/25 sec at pH 4.3-4.5 or thermized at 95-115°C/15 sec at pH 4.2, where the ambient-stable yogurt has good shininess, medium-high mouth viscosity and medium-high smoothness. For ambient-stable yoghurt samples prepared with a combination of Avicel^{®} GP 2313 & starch thermized at 115°C/15 sec at pH 4.6 show a dosage impact of Avicel^{®} GP 2313 with regards to protein protection. For ambient-stable yogurt made with 0.4% Avicel^{®} GP 2313 & starch thermized at 115°C/15 sec at pH 4.6, the ambient-stable yogurt has medium-high shininess, however the smoothness is low (=chalkiness mouth sensation), where the chalkiness is a sign of an un-stable ambient-stable yogurt. Ambient-stable yogurt made with 0.8% Avicel^{®} GP 2313 & starch thermized at 115°C/15 sec at pH 4.6, here the ambient-stable yogurt has medium-high shininess and medium-high smoothness (=no chalkiness), which means, that ambient-stable yogurt will stable with regards to protein protection. Visual aspect of shininess can be seen in figure 12 and figure 14.

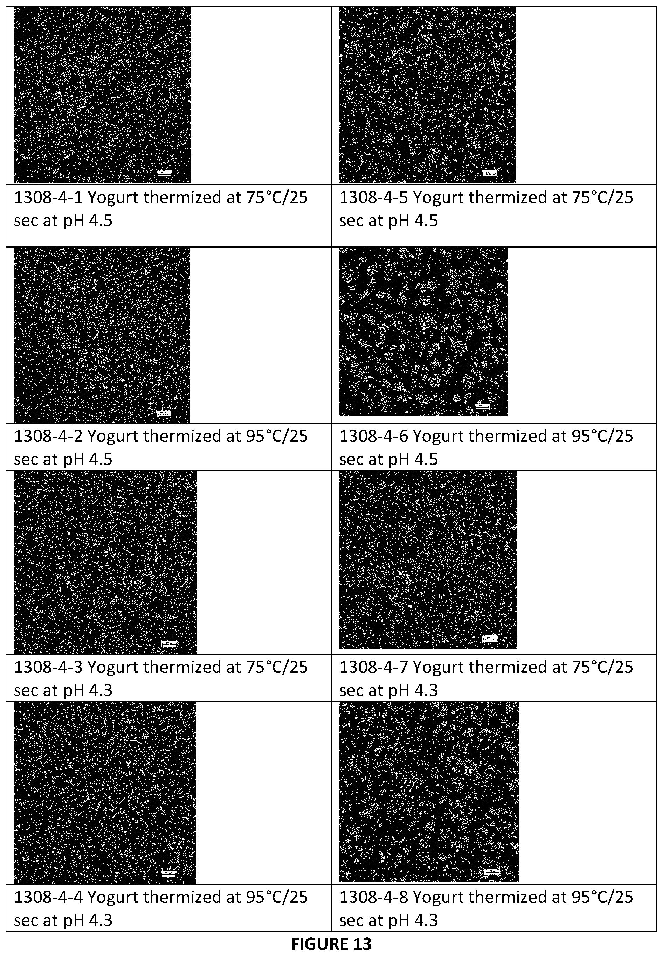

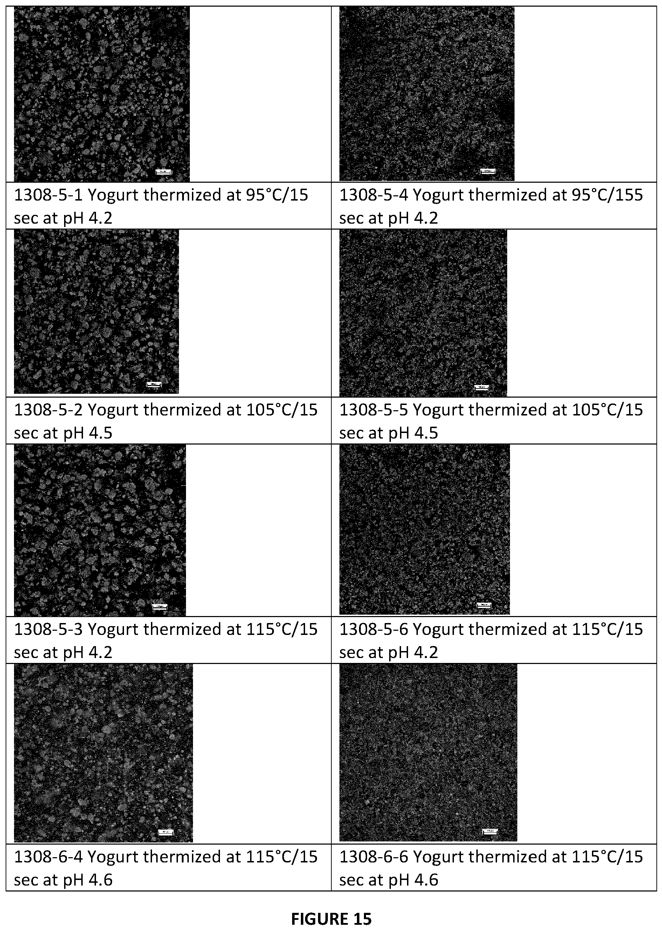

Confocal Laser Scanning Microscope (CLSM) photos as seen in figure 13 and figure 15 clearly shows, that ambient-stable yogurt made with the comparative reference of modified starch, maltodextrin, agar and pectin has small particles, when thermized at 75°C/25 sec at pH 4.3, which also corresponds to the yogurt has medium-high smoothness at sensory evaluation. The ambient-stable yogurt made with the comparative reference of modified starch, maltodextrin, agar and pectin when thermized at 95°C/25 sec at pH 4.3 or thermized at 75-95°C/25 sec at pH 4.5 or thermized at 95-105-115°C/15 sec at pH 4.2 , the Confocal Laser Scanning Microscope photos shows bigger particles and aggregated protein, which corresponds with the ambient-stable yogurt has low smoothness (=chalky texture) at the sensory evaluation.

The Confocal Laser Scanning Microscope (CLSM) photos clearly shows, that ambient-stable yogurt made with Avicel^{®} GP 2313 & starch thermized at 75-95°C/25 sec at pH 4.3-4.5 and thermized at 95-115°C/15 sec at pH 4.2 have small particles, which also corresponds to the ambient-stable yogurt has medium-high smoothness at sensory evaluation.

The Confocal Laser Scanning Microscope (CLSM) photos also a dosage impact for the combination of Avicel^{®} GP 2313 & starch in ambient-stable yogurt thermized at 115°C/15 sec at pH 4.6. Here the ambient-stable yogurt shows a dosage impact of Avicel^{®} GP 2313 with regards to protein protection. For ambient-stable yogurt made with 0.4% Avicel^{®} GP 2313 & starch thermized at 115°C/15 sec at pH 4.6 the Confocal Laser Scanning Microscope (CLSM) shows bigger particles and aggregated protein, which corresponds with the ambient-stable yogurt has low smoothness. For ambient-stable yogurt made with 0.8% Avicel^{®} GP 2313 & starch thermized at 115°C/15 sec at pH 4.6 the Confocal Laser Scanning Microscope (CLSM) small particles, which also corresponds to the ambient-stable yogurt has medium-high smoothness at sensory evaluation.

It has been surprisingly observed that the combination of Avicel^{®} GP 2313 and starch has given excellent protein protection in ambient-stable yogurt for pH 4.2-4.6 at higher thermization temperature, where the commonly used combination of starch, maltodextrin, agar and pectin fails to provide protein protection at thermization above 75°C at pH 4.2-4.3 as well as any thermization temperature of 75°C above 4.3.

## Claims

1. Composition for fermented or acidified milk products comprising a combination of colloidal microcrystalline cellulose and a starch in a ration between 1:2.5 to 1:7.

2. The composition, according to claim 1, wherein the starch is modified starch selected from E1442, E1450 and E1422.

3. The composition, according to any one of the preceding claims, wherein the acidified milk product is yogurt type with pH below 5.0, preferably pH between 3.8-4.6.

4. The composition, according to any one of the preceding claims, wherein the colloidal microcrystalline cellulose content is between 0.3%-1.2% of the final product.

5. The composition, according to any one the preceding claims, wherein the modified starch content is between 1.0%-4.0% of the final product.

6. Use of the composition described in claims 1 to 5 in fermented or acidified milk applications with pH below 5.0.

7. The use, according to claim 6, wherein the composition comprises between 0.3%-1.2% of colloidal microcrystalline cellulose and between 1.0%-4.0% of a modified starch in the final product.

8. The use, according to claims 6 or 7, wherein the protein content in the application between 0.5%- 3.5%, preferably between 1.0%-2.5%.

9. Use of the composition described in claims 1 to 5 in ambient stable fermented or acidified milk applications, wherein the protein content in the application is preferably between 2.0 - 3.5%.

10. Fermented or acidified milk product containing the composition as described in claims 1-5, wherein the composition is present in a proportion of 2.3 - 4.2% of the final product.

11. The fermented or acidified milk product, according to claim 10, wherein the colloidal microcrystalline cellulose is in the amount between 0.6-0.9%.

12. The fermented or acidified milk product, according to any one of claims 10 to 11, wherein the modified starch content is about 2.5%.

13. The fermented or acidified milk product, according to any one of claims 10 to 12, wherein the product is a yogurt type product with pH below 5.0.

14. Ambient stable fermented or acidified milk product containing the composition as described in claims 1-5, wherein the colloidal microcrystalline cellulose is in the amount between 0.3-0.8%, the protein content in the application is preferably between 2.0 - 3.5% and the modified starch content is between 1.0% -3.0% of the final product.

15. Ambient stable fermented or acidified milk product, according to claim 14, in which the thermization can be performed between pH 4.0-4.6 and temperature between 75-115°C/15-25 seconds.

16. Process for the production of a fermented or acidified milk products as described in claims 10 to 15 comprising a step in which the composition described in claims 1 to 5 is added to said milk product prior to the milk pasteurization step.

## Patentansprüche

1. Zusammensetzung für fermentierte oder angesäuerte Milchprodukte, umfassend eine Kombination von kolloidaler mikrokristalliner Cellulose und einer Stärke in einem Verhältnis von 1:2,5 bis 1:7.

2. Zusammensetzung nach Anspruch 1, wobei es sich bei der Stärke um eine aus E1442, E1450 und E1422 ausgewählte modifizierte Stärke handelt.

3. Zusammensetzung nach einem der vorhergehenden Ansprüche, wobei es sich bei dem angesäuerten Milchprodukt um einen Joghurttyp mit einem pH-Wert von unter 5,0, vorzugsweise einem pH-Wert von 3,8-4,6, handelt.

4. Zusammensetzung nach einem der vorhergehenden Ansprüche, wobei der Gehalt an kolloidaler mikrokristalliner Cellulose 0,3 % - 1,2 % des Endprodukts beträgt.

5. Zusammensetzung nach einem der vorhergehenden Ansprüche, wobei der Gehalt an modifizierter Stärke 1,0 % - 4,0 % des Endprodukts beträgt.

6. Verwendung der in den Ansprüchen 1 bis 5 beschriebenen Zusammensetzung in fermentierten oder angesäuerten Milchanwendungen mit einem pH-Wert von unter 5, 0 .

7. Verwendung nach Anspruch 6, wobei die Zusammensetzung im Endprodukt 0,3 % - 1,2 % kolloidale mikrokristalline Cellulose und 1,0 % - 4,0 % einer modifizierten Stärke umfasst.

8. Verwendung nach Anspruch 6 oder 7, wobei der Proteingehalt in der Anwendung 0,5 %- 3,5 %, vorzugsweise 1,0 % - 2,5 %, beträgt.

9. Verwendung der in den Ansprüchen 1 bis 5 beschriebenen Zusammensetzung in bei Raumtemperatur stabilen fermentierten oder angesäuerten Milchanwendungen, wobei der Proteingehalt in der Anwendung vorzugsweise 2,0 - 3,5 % beträgt.

10. Fermentiertes oder angesäuertes Milchprodukt, enthaltend die wie in den Ansprüchen 1-5 beschriebene Zusammensetzung, wobei die Zusammensetzung in einem Anteil von 2,3 - 4,2 % des Endprodukts vorliegt.

11. Fermentiertes oder angesäuertes Milchprodukt nach Anspruch 10, wobei die kolloidale mikrokristalline Cellulose in einer Menge von 0,6 - 0,9 % vorliegt.

12. Fermentiertes oder angesäuertes Milchprodukt nach einem der Ansprüche 10 bis 11, wobei der Gehalt an modifizierter Stärke etwa 2,5 % beträgt.

13. Fermentiertes oder angesäuertes Milchprodukt einem der Ansprüche 10 bis 12, wobei es sich bei dem Produkt um ein Produkt vom Joghurttyp mit einem pH-Wert von unter 5,0 handelt.

14. Bei Raumtemperatur stabiles fermentiertes oder angesäuertes Milchprodukt, enthaltend die wie in den Ansprüchen 1-5 beschriebene Zusammensetzung, wobei die kolloidale mikrokristalline Cellulose in einer Menge von 0,3 - 0,8 % vorliegt, der Proteingehalt in der Anwendung vorzugsweise 2,0 - 3,5 % beträgt und der Gehalt an modifizierter Stärke 1,0 % - 3,0 % des Endprodukts beträgt.

15. Bei Raumtemperatur stabiles fermentiertes oder angesäuertes Milchprodukt nach Anspruch 14, bei dem die Thermisierung bei einem pH-Wert von pH 4,0 - 4,6 und einer Temperatur von 75 - 115 °C über 15 - 25 Sekunden durchgeführt werden kann.

16. Verfahren zur Herstellung eines wie in den Ansprüchen 10 bis 15 beschriebenen fermentierten oder angesäuerten Milchprodukts, welches einen Schritt umfasst, bei dem man das Milchprodukt vor dem Milchpasteurisierungsschritt mit der in den Ansprüchen 1 bis 5 beschriebenen Zusammensetzung versetzt.

## Revendications

1. Composition pour des produits de lait fermenté ou acidifié comprenant une combinaison d'une cellulose microcristalline colloïdale et d'un amidon en un rapport compris entre 1 : 2,5 et 1 : 7.

2. Composition selon la revendication 1, l'amidon étant un amidon modifié choisi parmi E1442, E1450 et E1422.

3. Composition, selon l'une quelconque des revendications précédentes, le produit de lait acidifié étant du type yogourt doté d'un pH inférieur à 5,0, préférablement un pH compris entre 3,8 et 4,6.

4. Composition, selon l'une quelconque des revendications précédentes, la teneur en cellulose microcristalline colloïdale étant comprise entre 0,3 % et 1,2 % du produit final.

5. Composition, selon l'une quelconque des revendications précédentes, la teneur en amidon modifié étant comprise entre 1,0 % et 4,0 % du produit final.

6. Utilisation de la composition décrite dans les revendications 1 à 5 dans des applications de lait fermenté ou acidifié comportant un pH inférieur à 5,0.

7. Utilisation selon la revendication 6, la composition comprenant entre 0,3 % et 1,2 % de cellulose microcristalline colloïdale et entre 1,0 % et 4,0 % d'un amidon modifié dans le produit final.

8. Utilisation, selon les revendications 6 ou 7, la teneur en protéines dans l'application étant comprise entre 0,5 % et 3,5 %, préférablement entre 1,0 % et 2,5 %.

9. Utilisation de la composition décrite dans les revendications 1 à 5 dans des applications de lait fermenté ou acidifié stable dans des conditions ambiantes, la teneur en protéines dans l'application étant préférablement comprise entre 2 % et 3,5 %.

10. Produit de lait fermenté ou acidifié contenant la composition telle que décrite dans les revendications 1 à 5, la composition étant présente en une proportion de 2,3 à 4,2 % du produit final.

11. Produit de lait fermenté ou acidifié, selon la revendication 10, la cellulose microcristalline colloïdale étant présente en la quantité comprise entre 0,6 et 0,9 %.

12. Produit de lait fermenté ou acidifié, selon l'une quelconque des revendications 10 à 11, la teneur en amidon modifié étant d'environ 2,5 %.

13. Produit de lait fermenté ou acidifié, selon l'une quelconque des revendications 10 à 12, le produit étant un produit de type yogourt doté d'un pH inférieur à 5,0.

14. Produit de lait fermenté ou acidifié stable dans des conditions ambiantes contenant la composition telle que décrite dans les revendications 1 à 5, la cellulose microcristalline colloïdale étant présente en la quantité comprise entre 0,3 et 0,8 %, la teneur en protéines dans l'application étant préférablement comprise entre 2,0 % et 3,5 % et la teneur en amidon modifié étant comprise entre 1,0 % et 3,0 % du produit final.

15. Produit de lait fermenté ou acidifié stable dans des conditions ambiantes, selon la revendication 14, dans lequel la thermisation peut être réalisée entre pH 4,0 et 4,6 et une température comprise entre 75 et 115 °C/15 à 25 secondes.

16. Procédé pour la production d'un produit de lait fermenté ou acidifié tel que décrit dans les revendications 10 à 15 comprenant une étape dans laquelle la composition décrite dans les revendications 1 à 5 est ajoutée audit produit de lait avant l'étape de pasteurisation du lait.
